# EUROPÄISCHE PATENTSCHRIFT

(11) **EP 0 950 229 B1**
(45) Veröffentlichungstag und Bekanntmachung des Hinweises auf die Patenterteilung: **24.01.2001**
(21) Anmeldenummer: 97910188.8
(22) Anmeldetag: 07.11.1997
(51) Int. Cl.: G07C 9/00

(54) **VERFAHREN, SYSTEM UND VORRICHTUNGEN ZUR BESTIMMUNG DER AUTHENTIZITÄT VON PERSONEN**
METHOD, SYSTEM AND DEVICES FOR AUTHENTICATING PERSONS
PROCEDE, SYSTEME ET DISPOSITIFS POUR L'AUTHENTIFICATION DE PERSONNES

(43) Veröffentlichungstag der Anmeldung: 20.10.1999
(73) Patentinhaber: Swisscom AG, 3050 Bern (CH)
(72) Erfinder: RITTER, Rudolf, CH-3052 Zollikofen (CH)
(74) Vertreter: BOVARD AG - Patentanwälte
(86) Internationale Anmeldenummer: CH9700424
(87) Internationale Veröffentlichungsnummer: WO9924938

(56) Entgegenhaltungen:
- WO-A-96/18169
- WO-A-98/11750
- US-A- 5 131 038
- US-A- 5 420 908
- PATENT ABSTRACTS OF JAPAN vol. 096, no. 008, 30.August 1996 & JP 08 088841 A (ADO MANIYUARU:KK), 2.April 1996,

## Beschreibung

Die vorliegende Erfindung betrifft ein Verfahren, ein System und Vorrichtungen zur Bestimmung der Authentizität eines Benutzers oder einer Benutzergruppe eines Kommunikationsendgerätes.

Neben herkömmlichen Methoden um Personen mittels Fotografien und persönlichen Ausweispapieren zu authentifizieren sind im Stand der Technik auch Verfahren bekannt um Personen mittels biometrischen Merkmalen zu authentifizieren. In diesen Verfahren werden mess- und aufnehmbare Körpermerkmale als biometrische Schlüssel registriert und zum Zeitpunkt der Authentifizierung mit den entsprechenden Körpermerkmalen einer zu authentifizierenden Person verglichen. Bekannte Beispiele solcher biometrischen Merkmale umfassen Fingerabdrücke, Augenmuster, Gesichtskonturen oder Charakteristiken der Sprechstimme.

Es ist auch bekannt, dass ein Personal Computer (PC) mit Mitteln, unter anderem einer externen Videokamera, ausgerüstet werden kann, die es dem PC erlauben das Gesicht, respektive einige Gesichtsmerkmale, eines Benutzers in einem Lernprozess aufzunehmen und zu einem späteren Zeitpunkt zu Authentifizierungszwecken wieder zu verwenden, wobei der PC dem Benutzer den Zugang auf den PC nur gestattet wenn er die Gesichtsmerkmale wiedererkennt.

Die Kombination von Video Sensoren mit Kommunikationsendgeräten ist im Zusammenhang mit der Videotelefonie bekannt, die es auch in mobiler Ausführung gibt, in welcher ein Mobilfunktelefon mit einer Videokamera verbunden ist.

Ein Verfahren, das biometrisch messbare Daten wie Augenabdruck oder Fingerabdruck über Kommunikationsnetze, unter anderem mittels Mobiltelefon, als Suchbegriffe zum Auffinden von gespeicherten medizinischen Daten überträgt, ist in DE 39 43 097 A1 beschrieben. In diesem Verfahren wird im wesentlichen ein Individuum mittels biometrischen Merkmalen identifiziert, so dass auf seine medizinischen Daten zugegriffen werden kann. Es geht dabei aber nicht darum die Authentizität dieses Individuums zu überprüfen oder die Authentizität und Nichtabstreitbarkeit des Ursprungs der in diesem Verfahren über das Kommunikationsnetz ausgetauschten Daten zu gewährleisten.

Es ist die Aufgabe dieser Erfindung ein neues und verbessertes Verfahren und System zur Bestimmung der Authentizität eines Benutzers oder einer Benutzergruppe eines Kommunikationsendgerätes vorzuschlagen.

Gemäss der vorliegenden Erfindung wird dieses Ziel durch die Merkmale der unabhängigen Ansprüche 1, 24 und 34 erreicht. Dieses Ziel wird zudem auch durch das System gemäss Anspruch 48 erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass Körpermerkmale als biometrische Schlüssel gesichert auf einer persönlichen SIM Karte abgespeichert werden und dass diese SIM Karte durch einen Benutzer in ein Kommunikationsgerät eingeführt wird, welches vom Benutzer aktuelle Körpermerkmale und daraus aktuelle biometrische Schlüssel bestimmt und diese zur Authentifizierung des Benutzers mit den abgespeicherten biometrischen Schlüsseln auf der SIM Karte vergleicht. Dies hat den Vorteil, dass eine persönliche Karte den Benutzer in verschiedenen Kommunikationsendgeräten authentifizieren kann, ohne dass der Benutzer Passwörter, welche oft vergessen werden oder auch unrechtmässig eingegeben werden können, verwenden muss und ohne dass ein Benutzer, der die SIM Karte missbräuchlich, zum Beispiel durch Diebstahl oder zufälligen Fund, erworben hat authentifiziert wird. Ein zusätzlicher Vorteil besteht auch darin, dass die SIM Karte auch für eine Benutzergruppe vorbereitet werden kann, indem darauf biometrische Schlüssel für alle der Gruppe angehörenden Benutzer abgespeichert werden.

Um einer missbräuchlichen Authentifizierung, zum Beispiel durch fotografische Imitation von Körpermerkmalen, vorzubeugen werden in den biometrischen Schlüsseln auch Körperbewegungen miteinbezogen.

Erfindungsgemäss kann die Authentifizierung des Benutzers durch das Kommunikationsendgerät dazu dienen einem Benutzer die Benutzung des Kommunikationsendgerätes entsprechend dem Resultat der Authentifizierung zu gestatten oder zu verwehren. Das Resultat der Authentifizierung kann erfindungsgemäss aber auch drahtlos, insbesondere durch ein mobiles Kommunikationsendgerät, an eine externe gesicherte Vorrichtung übermittelt werden, so dass diese externe gesicherte Vorrichtung ihrerseits dem Benutzer entsprechend dem Resultat der Authentifizierung den Zugang zu ihren Diensten oder Gebäulichkeiten gestatten oder verwehren kann.

Erfindungsgemäss wird die Erstaufnahme von biometrischen Schlüsseln in einem mit einem Kommunikationsnetzwerk verbundenen Point of Presence (POP) durchgeführt. Von dort werden sie gesichert über das Kommunikationsnetzwerk an einen biometrischen Server übertragen, wo sie in Tabellen abgespeichert werden, wobei mindestens ein biometrischer Schlüssel in einer Tabelle einem entsprechenden Benutzer zugeordnet wird. Ergänzungen und Aktualisierungen von biometrischen Schlüsseln können ebenso im POP durchgeführt werden. Zudem ist es möglich mit der vorliegenden Erfindung biometrische Schlüssel direkt vom Kommunikationsendgerät aus zu aktualisieren, falls für den betreffenden Benutzer beim biometrischen Server bereits eine Pluralität von biometrischen Schlüsseln bekannt ist.

In der vorliegenden Erfindung werden bei der Authentifizierung und der Übermittlung von biometrischen Schlüsseln vorzugsweise Sicherheitsdienste, zum Beispiel Trusted Third Party (TTP) Dienste, zu Hilfe genommen um die Vertraulichkeit, die Authentizität, die Nichtabstreitbarkeit des Ursprungs und die Integrität von den dabei über ein Kommunikationsnetzwerk ausgetauschten Daten sowie die Authentizität des Senders dieser dabei ausgetauschten Daten zu gewährleisten.

Nachfolgend wird eine Ausführung der vorliegenden Erfindung anhand eines Beispieles beschrieben. Das Beispiel der Ausführung wird durch folgende beigelegte Figur illustriert:

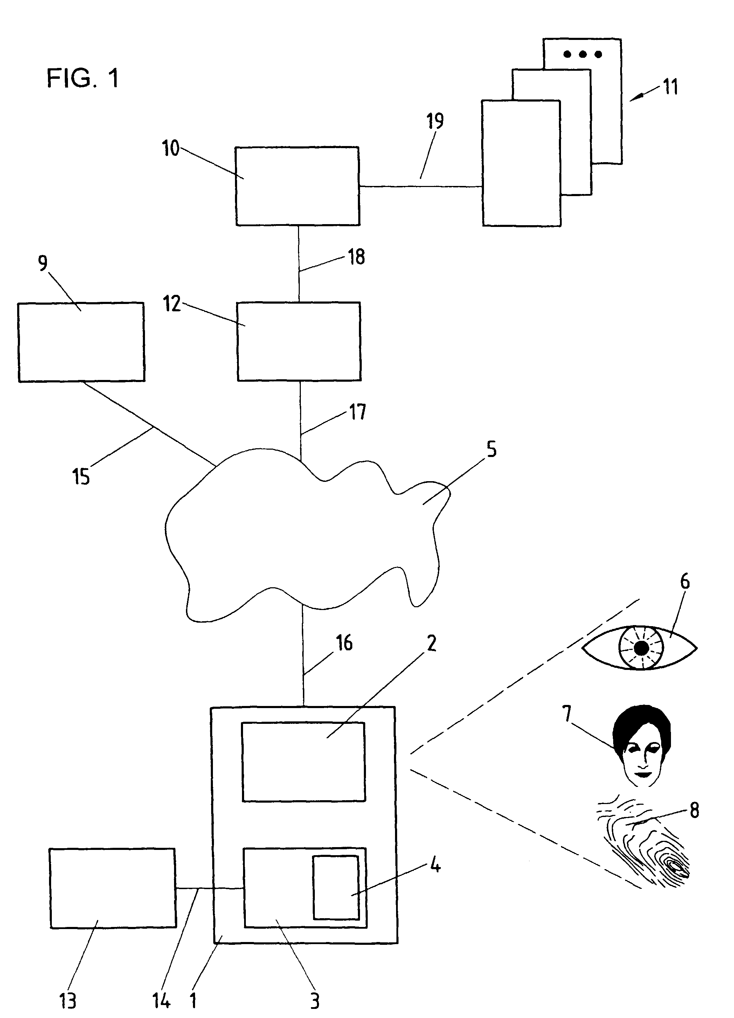

Figur 1 zeigt ein Übersichtsdiagramm mit einem Kommunikationsnetzwerk und einem damit verbundenen mobilen Kommunikationsendgerät mit einer SIM Karte und einem Video Sensor, einen biometrischen Server mit verbundenen Tabellen und SIM Server, einen Point of Presence, sowie eine gesicherte Vorrichtung.

Die Referenznummer 9 bezieht sich auf einen Point of Presence (POP), der beispielsweise mit einem Point of Sale eines Netzwerkbetreibers oder eines Dienstleistungsunternehmens verbunden ist. Der Point of Presence 9 verfügt über mindestens einen Computer der beispielsweise auch als Kommunikationsendgerät dient, vorzugsweise einen Personal Computer oder eine Workstation die an ein Kommunikationsnetzwerk 5, beispielsweise ein Fixnetz 15, angeschlossen sind. Der Point of Presence 9 verfügt zudem über nicht dargestellte, mit dem Computer verbundene Peripherie Geräte zum Aufnehmen von Körpermerkmalen, zum Beispiel eine Video Kamera, die über ein Kabel und eine Video Interface Karte mit dem Computer verbunden ist. Der Computer ist mit einem Programm ausgestattet, welches auf die Peripherie Geräte zugreifen, diese steuern und insbesondere deren aufgenommene Daten lesen, zwischenspeichern und verarbeiten kann. Das Programm verfügt auch über eine Benutzeroberfläche mittels welcher es, beispielsweise durch einen Operator, der ein Angestellter des POP 9 ist, bedient werden kann. Die Benutzeroberfläche hilft dem Operator die Körpermerkmale eines Kunden, zum Beispiel seine Gesichtszüge 7, Augenmuster 6 oder Fingerabrücke 8, aufzunehemen indem es dem Fachmann bekannte Elemente aufweist um beispielsweise die Video Kamera zu justieren, Kontraste einzustellen, Bildausschnitte geeignet darzustellen und dem Operator auch anzuzeigen, wenn die durch das Programm herausgearbeiteten biometrischen Schlüssel fertiggestellt sind, nachdem sie das Programm mit Hilfe des Kunden vor Ort für Authentifizierungszwecke überprüft hat.

Insbesondere für die Aufnahme von Körperbewegungen ist es notwendig, dass das Programm über die Benutzeroberfläche den Kunden und den Operator instruiert zum Beispiel gewisse bestimmte Bewegungen wie beispielsweise Mund oder Augenbewegungen auszuführen. Es ist hier wichtig zu erwähnen, dass in einer Variante die Benutzeroberfläche so ausgeführt werden kann, dass sie für die Aufnahme der biometrischen Schlüssel völlig automatisiert ist und keinen Operator braucht sondern Instruktionen direkt an den Kunden gibt. In dieser Variante sind der Computer mit seinem Bildschirm und der Kamera beispielsweise ähnlich angeordnet wie man dies zum Beispiel von Passfotoautomaten oder Bankautomaten her kennt.

Neben visuellen biometrischen Schlüsseln können in entsprechender Weise und mittels Peripherie Geräten wie Mikrofon und Audio Interface Karte auch Stimmerkmale aufgenommen und als biometrische Schlüssel abgespeichert werden.

Die aufgenommen und erarbeiteten biometrischen Schlüssel eines Kunden können in einem entsprechenden persönlichen Benutzerprofil abgelegt werden sie können aber auch einer Benutzergruppe zugeordnet werden. Das Programm und seine Benutzeroberfläche verfügen über die für einen Fachmann leicht implementierbaren entsprechenden Komponenten, um die dazugehörenden Personaldaten aufzunehemen und in entsprechenden Benutzer- und/oder Benutzergruppenprofile abzulegen. Dabei können zudem auch weitere Sicherheitsinformationen, wie zum Beispiel Sicherheitsstufen um beispielsweise gesicherte Vorrichtungen 13 in verschiedene Stufen von Zugangsrechten auf verschiedene Dienste zu unterteilen, zum Beispiel könnten die Zugriffsrechte eines Benutzer darauf beschränkt werden Gespräche über das Mobilfunktelefon 1 zu führen während ein anderer Benutzer zusätzlich auch andere Funktionen, wie beispielsweise anwählen und ausführen von speziellen Diensten über das Mobilfunktelefon 1, ausführen darf. Andere Beispiele für weitere Sicherheitsinformationen, die eingegeben und abgelegt werden können, sind Angaben zur Gültigkeitsdauer, um beispielsweise die Gültigkeit gewisser Rechte auf eine bestimmte Zeitdauer oder einen bestimmten Zeitpunkt zu begrenzen, Ortsangaben, um beispielsweise Zugriffsrechte auf Vorrichtungen oder Dienste auf bestimmte geographische Gebiete zu begrenzen, oder persönliche Passworte.

Es ist wichtig, dass die Zuordnung der biometrischen Schlüssel an ein Benutzer- oder Benutzergruppenprofil kontrolliert, zum Beispiel nur durch einen Operator, und unter strikten Authentifizierungsbedingungen, zum Beispiel mittels mehreren offiziellen Ausweispapieren mit Fotografien und eventuell mit bestätigendem Zeugnis von anwesenden Drittpersonen, vorgenommen wird um eine missbräuchliche Zuordnung zu verhindern.

Zum Abschluss der Aufnahme der biometrischen Schlüssel werden die Benutzer- oder Benutzergruppenprofile mit den biometrischen Schlüsseln und Sicherheitsinformationen durch das Programm des Computers gesichert über ein Kommunikationsnetzwerk 5 an einen Server zur Verwaltung der biometrischen Schlüssel, im folgenden ein biometrischer Server 10 genannt, übermittelt und dort in Tabellen 11, die mit dem biometrischen Server 10 verbunden 19 sind, für den entsprechenden Benutzer oder die entsprechende Benutzergruppe abgespeichert. Für den Fachmann ist es klar, dass es verschiedene Möglichkeiten gibt den biometrischen Server 10 mit den Tabellen 11 zu implementieren, zum Beispiel können die Tabellen 11 in einem Datenbank Server sein, welcher sich zusammen mit dem biometrischen Server auf einem Computer befindet oder welcher sich auf einem anderen Computer befindet der mit dem Computer des biometrischen Servers 10 über ein Kommunikationsnetzwerk verbunden ist. Auch für die Abspeicherung der Informationen in den Tabellen 11 gibt es für den Fachmann verschiedene Varianten, auf die hier nicht näher eingegangen wird. Dieselben Informationen werden ebenfalls auf der persönlichen SIM Karte 3 des Benutzers, vorzugsweise eine GSM Karte, oder auf möglicherweise mehreren SIM Karten 3 einer Benutzergruppe in entsprechenden Tabellen 4 abgespeichert, indem sie vom POP 9 an einen SIM Server 12 und von dort, gemäss dem in EP 0689 368 B1 beschriebenen SICAP Verfahren, mittels speziellen Kurzmeldungen über ein Mobilfunknetz, beispielsweise gemäss dem GSM Standard, an die SIM Karte übertragen und dort abgespeichert werden. In einer anderen Variante wird die SIM Karte 3 in ein entsprechendes, nicht dargestelltes Interface des entsprechenden Computers im POP 9 eingeführt und das Programm speichert die Informationen gesichert in der Tabelle 4 ab. Die somit persönlichen SIM Karten 3 können danach an ihren Benutzer oder an ihre Benutzergruppe übergeben werden.

Für die gesicherte Übermittlung und Abspeicherung von biometrischen Schlüsseln werden vorzugsweise Sicherheitsdienste, zum Beispiel Trusted Third Party (TTP) Dienste, zu Hilfe genommen, um die Vertraulichkeit, die Authentizität, die Nichtabstreitbarkeit des Ursprungs und die Integrität von den übermittelten Daten sowie die Authentizität des Senders dieser übermittelten Daten zu gewährleisten. Es ist durchaus auch möglich die Verschlüsselung mittels einem Point-To-Point Verfahren durchzuführen.

Im POP 9 ist es zudem auch möglich weitere Dienste, insbesondere Dienste zur Aktualisierung von biometrischen Schlüsseln, zum Beispiel wegen altersbedingten Veränderungen, oder Dienste zur Ergänzungen von weiteren biometrischen Schlüsseln oder anderen Sicherheitsinformationen anzubieten, welche durch den Fachmann entsprechend den obenstehenden Ausführungen implementiert werden können.

Der Benutzer kann seine persönliche SIM Karte 3 in ein Kommunikationsendgerät 1 einschieben und das Gerät einschalten. In diesem Beispiel ist das Kommunikationsendgerät 1 ein Mobilfunktelefon 1, welches mit einem Video-Sensor 2 zur Aufnahme von Körpermerkmalen, wie zum Beispiel Augenmuster 6, Gesichtsmerkmale 7 oder Fingerabdrücke 8, ausgerüstet ist. Der Video-Sensor 2 kann direkt in das Mobilfunktelefon 1 eingebaut sein oder er kann mittels einem Adapter, der beispielsweise selber ein Interface zur Aufnahme einer SIM Karte 3 umfasst, beispielsweise in das Interface für die SIM Karte 3 im Mobilfunktelefon 1 eingeschoben werden. Nach dem Einschalten wird ein Authentifizierungsprogramm, welches sich beispielsweise auf der SIM Karte 3 befindet, aufgestartet und der Benutzer wird beispielsweise mittels des nicht dargestellten Displays des Mobilfunktelefons 1 aufgefordert in den Video-Sensor 2 zu schauen, einen bestimmten Finger auf den Video-Sensor 2 zu halten und/oder in das Mobilfunktelefon 1 zu sprechen. Die Daten welche mittels des Video Sensors 2, und gegebenenfalls mittels des nicht dargestellten Mikrofons des Mobilfunktelefons 1, aufgenommen werden, werden durch das Authentifizierungsprogramm zwischengespeichert; daraus werden aktuelle biometrische Schlüssel herausgearbeitet, welche zwischengespeichert und mit den abgespeicherten biometrischen Schlüsseln 4 verglichen werden. Zusätzlich zu diesem direkten Vergleich kann die Authentizität und die Integrität der abgespeicherten biometrischen Schlüssel 4 zum Beispiel mit Hilfe von TTP Diensten vom biometrischen Server 10 bestätigt werden. Falls der Vergleich des aktuellen biometrischen Schlüssels mit dem auf der SIM Karte 1 abgespeicherten biometrischen Schlüssel 4 positiv ausfällt und die abgespeicherten biometrischen Schlüssel 4 vom biometrischen Server 10 positiv authentifiziert werden, kann zum Beispiel die weitere Benutzung des Mobilfunktelefons 1 freigegeben werden. Ansonsten kann die weitere Benutzung des Mobilfunktelefons 1 durch diesen Benutzer verwehrt und das Mobilfunktelefon 1 beispielsweise abgeschaltet werden. Die Freigabe kann aufrechterhalten werden bis das Mobilfunktelefon 1 wieder ausgeschaltet wird oder sie kann auch zeitbeschränkt sein, indem der Benutzer nach einer vordefinierten Periode wieder authentifiziert werden muss, dies kann beispielsweise auch automatisch, während der Benutzung des Mobilfunktelefons 1 ausgeführt werden.

Die SIM Karte 3 kommuniziert mit dem biometrischen Server 10 vorzugsweise mittels speziellen Kurzmeldungen, welche über ein Mobilfunknetz 16, beispielsweise gemäss dem GSM Standard, innerhalb des Kommunikationsnetzwerkes 5, an einen SIM Server 12 geschickt werden, welcher ans Kommunikationsnetzwerk 5 über die Verbindung 17 angeschlossen ist und diese speziellen Kurzmeldungen gemäss dem in EP 0689 368 B1 beschriebenen SICAP Verfahren an den biometrischen Server 10 zur Bearbeitung über die Verbindung 18 weiterleitet.

Falls beim biometrischen Server 10 vom Benutzer eine Pluralität von biometrischen Schlüsseln 11 bekannt ist, ist es möglich biometrische Schlüssel 11, die sich zum Beispiel altersbedingt verändert haben, direkt vom Mobilfunktelefon 1 aus zu aktualisieren. Voraussetzung dafür ist, dass der Benutzer durch mindestens einen zweiten nicht veränderungsbedürftigen biometrischen Schlüssel authentifiziert wurde und dass die Qualität der Video-Informationen, welche für die Aktualisierung eines ersten biometrischen Schlüssels verwendet werden sollen vordefinierten minimalen Anforderungen genügen, dies können zum Beispiel Anforderungen an minimale Lichtverhältnisse oder Bildkontraste oder auch Anforderungen an die maximale Abweichung der neuen biometrischen Schlüssel von den alten biometrischen Schlüsseln sein.

In einer Variante dient die Authentifizierung nicht in erster Linie der Kontrolle der Benutzung des Mobilfunktelefons 1, sondern das Resultat der Authentifizierung, gemäss der obenstehenden Ausführung, wird gesichert und drahtlos an eine externe gesicherte Vorrichtung 13 übermittelt, welche dann ihrerseits den Zugang zu der Vorrichtung 13 entsprechend freigibt oder verwehrt. Zusammen mit dem Resultat der Authentifizierung können auch Personaldaten des Benutzers an die gesicherte Vorrichtung 13 übertragen werden, so dass die gesicherte Vorrichtung 13 auf Grund dieser Personaldaten des authentifizierten Benutzers den Zugang freigeben oder verweheren kann. In einer anderen Variante werden der gesicherten Vorrichtung 13 zusammen mit dem Resultat der Authentifizierung weitere Sicherheitsinformationenen des Benutzers, wie beispielsweise Sicherheitsstufen, Ortsangaben und Angaben zur Gültigkeitsdauer, übermittelt, womit die gesicherte Vorrichtung 13 den Entscheid zur Freigabe oder Verwehrung des Zugangs treffen kann. In einer anderen Variante übermittelt die gesicherte Vorrichtung 13 auf Anfrage Informationen zu ihrer Identifikation an das Mobilfunktelefon 1, womit das Mobilfunktelefon 1 während des Authentifizierungsprozesses mittels weiteren Sicherheitsinformationen des Benutzers, wie beispielsweise Sicherheitsstufen, Ortsangaben und Angaben zur Gültigkeitsdauer, auch Entscheide über den Zugang des Benutzers zu der betreffenden gesicherten Vorrichtung 13 fällen und an die gesicherte Vorrichtung 13 übermitteln kann. Die externe gesicherte Vorrichtung 13 ist zum Beispiel ein Apparat, beispielsweise ein Bank-Automat oder ein Video-Terminal für Informationsabfragen, der Eingang zu einem gesicherten Gebäude, wie beispielsweise eine geheime industrielle Fertigungsanlage, eine Polizeikaserne oder ein Atomkraftwerk, oder der Eingang zu einem gesperrten Gelände, wie beispielsweise eine Armee Basis, ein Flughafen oder ein Fabrikareal. Die drahtlose Übermittlung kann beispielsweise kontaktlos über eine induktive Verbindung 14 mittels einer elektrischen Spule auf der SIM Karte 3 ausgeführt werden. Das Mobilfunktelefon 1 kann die Übermittlung an die gesicherte Vorrichtung 13 auch mittels einer nicht dargestellten kontaktlosen Infrarot-Schnittstelle oder mittels Kurzmeldungen ausführen. Die Übermittlung erfolgt jeweils gesichert, zum Beispiel unter Zuhilfenahme von TTP Diensten oder mittels einem Point-To-Point Verfahren.

In einer weiteren Variante befindet sich der Video-Sensor ausserhalb des Mobilfunktelefons 1, zum Beispiel in der externen gesicherten Vorrichtung 13. In dieser Variante werden die Video-Informationen durch die externe Video Kamera aufgenommen und zur Auswertung drahtlos auf das Mobilfunktelefon übertragen. Die drahtlose Übertragung kann beispielsweise kontaktlos über eine induktive Verbindung 14 mittels einer elektrischen Spule auf der SIM Karte 3 ausgeführt werden. Die gesicherte Vorrichtung 13 kann die Übermittlung an das Mobilfunktelefon 1 auch mittels einer nicht dargestellten kontaktlosen Infrarot-Schnittstelle oder mittels Kurzmeldungen ausführen. Die Übermittlung erfolgt jeweils gesichert zum Beispiel unter Zuhilfenahme von TTP Diensten oder mittels einem Point-To-Point Verfahren.

Es muss hier auch erwähnt werden, dass neben Mobilfunktelefonen 1 auch andere Kommunikationsendgeräte, wie zum Beispiel Personal Computers, Laptop Computers, oder Palmtop Computers, diese Authentifizierungsverfahren ausführen können wenn sie mit einer SIM Karte 3 und mit Peripherie Geräten zur Aufnahme von Körpermerkmalen ausgerüstet werden. Zudem muss sich die Anwendung der Authentifizierung nicht auf die Zugangskontrolle für Kommunikationsendgeräte oder externe gesicherte Vorrichtungen 13 beschränken, sondern sie kann durchaus auch für die Zugriffskontrolle auf Dienste angewendet werden, insbesondere auch auf Dienste die über das Kommunikationsnetzwerk 5 verfügbar sind, welches auch das Internet umfassen kann. In diesen Fällen wird das Resultat der Authentifizierung an den betreffenden Dienstanbieter, beispielsweise einen automatisierten Internet Site, übermittelt welcher demzufolge Dienste freigeben oder verwehren kann. Das Resultat der Authentifizierung wird eventuell zusammen mit Informationen über Zugriffsrechte des Benutzers auf die betreffenden Dienste oder zusammen mit Personaldaten des Benutzers an den Dienstanbieter übermittelt, wie dies obenstehend im Zusammenhang mit gesicherten Vorrichtungen 13 beschrieben wurde.

Es ist durchaus möglich, dass dieses Verfahren und System durch einen Dienstleistungsanbieter gegen Bezahlung als Dienst an Dritte angeboten werden kann, welche zum Beispiel daran interessiert sind ihre Vorrichtungen, Gebäulichkeiten, Gebiete oder Dienste zu sichern.

## Patentansprüche

1. Verfahren zur Bestimmung der Authentizität eines Benutzers oder einer Benutzergruppe eines Kommunikationsendgerätes (1), dadurch gekennzeichnet, dass es folgende Schritte umfasst:
- Aufnahme und Zwischenspeicherung von Video-Informationen von Körpermerkmalen (6, 7, 8) des Benutzers oder der Benutzergruppe in einem Point of Presence (POP) (9),
- Verarbeitung der genannten zwischengespeicherten Video-Informationen, so dass bestimmte Merkmale als biometrische Schlüssel herausgearbeitet werden,
- Abspeichern der biometrischen Schlüssel in Tabellen (11) eines biometrischen Servers (10) und in einer SIM Karte (3) des Benutzers oder der Benutzergruppe, wobei mindestens ein biometrischer Schlüssel in einer Tabelle (4, 11) einem entsprechenden Benutzer zugeordnet wird,
- Einführen der SIM Karte (3), die mindestens einen persönlichen biometrischen Schlüssel enthält, in ein Kommunikationsendgerät (1) durch den Benutzer,
- Aufnehmen und Zwischenspeichern von aktuellen Video-Informationen von mindestens einem Körpermerkmal (6, 7, 8) des Benutzers über einen Video-Sensor (2),
- Verarbeitung der zwischengespeicherten aktuellen Video-Informationen des Benutzers, so dass mindestens ein bestimmtes Merkmal als aktueller biometrischer Schlüssel herausgearbeitet und zwischengespeichert wird,
- Bestimmung der Authentizität durch Vergleich des mindestens einen zwischengespeicherten aktuellen biometrischen Schlüssels des Benutzers mit dem mindestens einen gespeicherten biometrischen Schlüssel (4), wobei bei einem positiven Vergleich die Authentizität als sichergestellt gilt und bei einem negativen Vergleich die Authentizität als nicht sichergestellt gilt.

2. Verfahren gemäss dem vorhergehenden Anspruch, dadurch gekennzeichnet, dass beim Aufnehmen und Zwischenspeichern von aktuellen Video-Informationen der Video-Sensor (2) insbesondere auch Bewegung registriert und dies bei der Bestimmung der Authentizität miteinbezogen wird.

3. Verfahren gemäss einem der vorhergehenden Ansprüche, dadurch gekennzeichnet, dass das Zwischenspeichern von aktuellen Video-informationen, deren Verarbeitung und erneute Zwischenspeicherung, die Bestimmung der Authentizität durch den Vergleich mit den abgespeicherten biometrischen Schlüsseln (4) durch die SIM Karte (3) ausgeführt wird.

4. Verfahren gemäss einem der vorhergehenden Ansprüche, dadurch gekennzeichnet, dass bei der Übermittlung von mindestens gewissen Meldungen Sicherheitsdienste des TTP (TTP Dienste) zu Hilfe genommen werden um die Vertraulichkeit, die Authentizität, die Nichtabstreitbarkeit des Ursprungs und die Integrität von den dabei über ein Kommunikationsnetzwerk (5) ausgetauschten Daten sowie die Authentizität des Senders dieser dabei ausgetauschten Daten zu gewährleisten.

5. Verfahren gemäss einem der vorhergehenden Ansprüche, dadurch gekennzeichnet, dass im POP (9) zusätzlich zu den biometrischen Schlüsseln unter Zuhilfenahme von TTP Diensten Sicherheitsinformationen aufgenommen und in den Tabellen (11) des biometrischen Servers (10) und in der SIM Karte (3) abgespeichert werden, wobei sie in Tabellen (4, 11) den entsprechenden Benutzern oder Benutzergruppen zugeordnet werden und dass diese Sicherheitsinformationen bei der Bestimmung der Authentizität miteinbezogen werden.

6. Verfahren gemäss dem vorhergehenden Anspruch, dadurch gekennzeichnet, dass die zusätzlichen Sicherheitsinformationen Sicherheitsstufen umfassen.

7. Verfahren gemäss einem der Ansprüche 5 bis 6, dadurch gekennzeichnet, dass die zusätzlichen Sicherheitsinformationen Gültigkeitsdauerangaben umfassen.

8. Verfahren gemäss einem der Ansprüche 5 bis 7, dadurch gekennzeichnet, dass die zusätzlichen Sicherheitsinformationen Ortsangaben umfassen.

9. Verfahren gemäss einem der Ansprüche 5 bis 8, dadurch gekennzeichnet, dass die zusätzlichen Sicherheitsinformationen Passwörter umfassen.

10. Verfahren gemäss einem der vorhergehenden Ansprüche, dadurch gekennzeichnet, dass im POP (9) bereits bestehende Informationen für entsprechende Benutzer oder Benutzergruppen unter Zuhilfenahme von TTP Diensten aktualisiert und ergänzt werden können.

11. Verfahren gemäss einem der vorhergehenden Ansprüche, dadurch gekennzeichnet, dass biometrische Schlüssel, die in den Tabellen (4, 11) des biometrischen Servers (10) und in der SIM Karte (3) eines Kommunikationsendgerätes (1) abgespeichert sind, unter Zuhilfenahme von TTP Diensten direkt vom Kommunikationsendgerät (1) aus aktualisiert werden können.

12. Verfahren gemäss einem der vorhergehenden Ansprüche, dadurch gekennzeichnet, dass inbesondere Gesichtsmerkmale (7) als biometrische Schlüssel herausgearbeitet werden.

13. Verfahren gemäss einem der vorhergehenden Ansprüche, dadurch gekennzeichnet, dass inbesondere Augenmuster (6) als biometrische Schlüssel herausgearbeitet werden.

14. Verfahren gemäss einem der vorhergehenden Ansprüche, dadurch gekennzeichnet, dass inbesondere Fingerabdrücke (8) als biometrische Schlüssel herausgearbeitet werden.

15. Verfahren gemäss einem der vorhergehenden Ansprüche, dadurch gekennzeichnet, dass neben visuellen Merkmalen inbesondere auch Sprechstimmerkmale als biometrische Schlüssel aufgenommen werden.

16. Verfahren gemäss einem der vorhergehenden Ansprüche, dadurch gekennzeichnet, dass das Aufnehmen von aktuellen Video-Informationen mit einem Video-Sensor (2) ausgeführt wird, der sich im Kommunikationsgerät (1) befindet.

17. Verfahren gemäss einem der vorhergehenden Ansprüche, dadurch gekennzeichnet, dass das Aufnehmen von aktuellen Video-Informationen mit einem Video-Sensor ausgeführt wird, der sich ausserhalb des Kommunikationsgerätes (1) befindet, wobei die Video-Informationen zur Zwischenspeicherung und Weiterverarbeitung ans Kommunikationsgerät (1) übermittelt werden.

18. Verfahren gemäss dem vorhergehenden Anspruch, dadurch gekennzeichnet, dass die Übermittlung der aktuellen Video-Informationen ans Kommunikationsgerät (1) induktiv (14) über eine Spule in einer SIM Karte (3) ausgeführt wird.

19. Verfahren gemäss dem vorhergehenden Anspruch 17, dadurch gekennzeichnet, dass die Übermittlung der aktuellen Video-Informationen ans Kommunikationsgerät (1) mittels Infrarot ausgeführt wird.

20. Verfahren gemäss dem vorhergehenden Anspruch 17, dadurch gekennzeichnet, dass die Übermittlung der aktuellen Video-Informationen ans Kommunikationsgerät (1) mittels Kurzmeldungen ausgeführt wird.

21. Verfahren gemäss einem der Ansprüche 17 bis 20, dadurch gekennzeichnet, dass die Video-Informationen unter Zuhilfenahme von TTP Diensten ans Kommunikationsgerät (1) übermittelt werden.

22. Verfahren gemäss einem der vorhergehenden Ansprüche, dadurch gekennzeichnet, dass die Kommunikation zwischen der SIM Karte (3) im Kommunikationsendgerät (1) und dem biometrischen Server (10) mittels speziellen Meldungen über einen SIM Server (12) ausgeführt wird.

23. Verfahren gemäss einem der vorhergehenden Ansprüche, dadurch gekennzeichnet, dass für den Fall der Sicherstellung der Authentizität des Benutzers die Benützung des Kommunikationsendgerätes (1) freigegeben werden kann während für den Fall der Nicht-Sicherstellung der Authentizität des Benutzers die Benützung des Kommunikationsendgerätes (1) nicht freigegeben wird.

24. Mobile Vorrichtung (1) für das Telefonieren über Funk, welche ein Interface zum Aufnehmen einer SIM Karte (3) und einen Video-Sensor (2) zur Aufnahme von Video-Informationen umfasst, dadurch gekennzeichnet, dass sie über Speichermittel verfügt um biometrische Schlüssel zu speichern (4), dass sie Verarbeitungsmittel umfasst um aus den genannten Video-Informationen bestimmte Merkmale herauszuarbeiten und dass sie Vergleichsmittel umfasst um diese bestimmten Merkmale mit den gespeicherten biometrischen Schlüsseln (4) zu vergleichen.

25. Vorrichtung (1) gemäss dem vorhergenden Anspruch, dadurch gekennzeichnet, dass sie ein Mobilfunktelefon umfasst in welches der Video-Sensor (2) direkt eingebaut ist.

26. Vorrichtung (1) gemäss dem Anspruch 24, dadurch gekennzeichnet, dass sie einen Adapter umfasst in welchen der Video-Sensor eingebaut ist.

27. Vorrichtung (1) gemäss einem der Ansprüche 24 bis 26, dadurch gekennzeichnet, dass sie eine SIM Karte (3) umfasst, welche sich im genannten Interface zum Aufnehmen der SIM Karte (3) befindet und in welcher die genannten biometrischen Schlüssel (4) gespeichert sind.

28. Vorrichtung (1) gemäss dem vorhergenden Anspruch, dadurch gekennzeichnet, dass die genannten Speichermittel, Verarbeitungsmittel und Vergleichsmittel auf der SIM Karte (3) implementiert sind.

29. Vorrichtung (1) gemäss einem der Ansprüche 24 bis 28, dadurch gekennzeichnet, dass die Verarbeitungsmittel speziell darauf eingerichtet sind aus den Video-Informationen Körpermerkmale (6, 7, 8) von Personen zu ermitteln.

30. Vorrichtung (1) gemäss dem vorhergenden Anspruch, dadurch gekennzeichnet, dass die Körpermerkmale auf welche die Verarbeitungsmittel speziell eingerichtet sind Gesichtszüge (7) umfassen.

31. Vorrichtung (1) gemäss einem der Ansprüche 29 bis 30, dadurch gekennzeichnet, dass die Körpermerkmale auf welche die Verarbeitungsmittel speziell eingerichtet sind Augenmuster (6) umfassen.

32. Vorrichtung (1) gemäss einem der Ansprüche 29 bis 31, dadurch gekennzeichnet, dass die Körpermerkmale auf welche die Verarbeitungsmittel speziell eingerichtet sind Fingerabdrücke (8) umfassen.

33. Vorrichtung (1) gemäss einem der Ansprüche 24 bis 32, dadurch gekennzeichnet, dass der biometrische Schlüssel auch Körperbewegungen umfasst.

34. Subscriber Identity Module (SIM) Karte (3) für ein Kommunikationsendgerät (1) dadurch gekennzeichnet, dass mindestens ein biometrischer Schlüssel zur Bestimmung der Authentizität einer Person oder einer Gruppe von Personen im Speicher (4) der SIM Karte (3) gespeichert ist.

35. SIM Karte (3) gemäss dem vorhergenden Anspruch, dadurch gekennzeichnet, dass der abgespeicherte biometrische Schlüssel Gesichtsmerkmale (7) umfasst.

36. SIM Karte (3) gemäss einem der Ansprüche 34 bis 35, dadurch gekennzeichnet, dass der abgespeicherte biometrische Schlüssel Augenmuster (6) umfasst.

37. SIM Karte (3) gemäss einem der Ansprüche 34 bis 36, dadurch gekennzeichnet, dass der abgespeicherte biometrische Schlüssel Fingerabdrücke (8) umfasst.

38. SIM Karte (3) gemäss einem der Ansprüche 34 bis 37, dadurch gekennzeichnet, dass die abgespeicherten biometrischen Schlüssel (4) neben visuellen Merkmalen auch Sprechstimmerkmale umfassen.

39. SIM Karte (3) gemäss einem der Ansprüche 34 bis 38, dadurch gekennzeichnet, dass andere Sicherheitsinformationen auf der SIM Karte (3) gespeichert sind.

40. SIM Karte (3) gemäss dem vorhergenden Anspruch, dadurch gekennzeichnet, dass die abgespeicherten Sicherheitsinformationen Sicherheitsstufen umfassen.

41. SIM Karte (3) gemäss einem der Ansprüche 39 bis 40, dadurch gekennzeichnet, dass die abgespeicherten Sicherheitsinformationen Gültigkeitsdauerangaben umfassen.

42. SIM Karte (3) gemäss einem der Ansprüche 39 bis 41, dadurch gekennzeichnet, dass die abgespeicherten Sicherheitsinformationen Ortsangaben umfassen.

43. SIM Karte (3) gemäss einem der Ansprüche 39 bis 42, dadurch gekennzeichnet, dass die abgespeicherten Sicherheitsinformationen Passwörter umfassen.

44. SIM Karte (3) gemäss einem der Ansprüche 34 bis 43, dadurch gekennzeichnet, dass sie über Mittel verfügt um Video-Informationen zwischenzuspeichern, um aus den zwischengespeicherten Video-Informationen bestimmte Merkmale herauszuarbeiten und diese bestimmten Merkmale zwischenzuspeichern, um die genannten zwischengespeicherten Merkmale mit den genannten gespeicherten biometrischen Schlüsseln (4) zu vergleichen und um in Äbhängigkeit des Resultates dieses Vergleichs verschiedene weitere Schritte auszuführen.

45. SIM Karte (3) gemäss einem der Ansprüche 34 bis 44, dadurch gekennzeichnet, dass sie über Mittel verfügt um digital signierte und chiffrierte Meldungen, insbesondere unter Zuhilfenahme von Trusted Third Party (TTP) Diensten, zu verfassen und zu dechiffrieren damit die Vertraulichkeit, die Authentizität, die Nichtabstreitbarkeit des Ursprungs und die Integrität von diesen Meldungen sowie die Authentizität von Sendern dieser Meldungen gewährleistet ist, und um diese Meldungen an einen biometrischen Server (10) zu übertragen.

46. SIM Karte (3) gemäss einem der Ansprüche 34 bis 45, dadurch gekennzeichnet, dass sie über Mittel verfügt um Meldungen insbesondere gemäss einem Point-To-Point Verfahren zu verfassen und zu dechiffrieren.

47. SIM Karte (3) gemäss einem der Ansprüche 34 bis 46, dadurch gekennzeichnet, dass sie eine elektrische Spule umfasst über welche sie induktiv (14) mit externen, gesicherten Vorrichtungen (13) Daten betreffend deren Sicherheit austauschen kann.

48. System zur Ausführung eines Verfahrens gemäss den Ansprüchen 1 bis 23 mit mobilen Vorrichtungen (1) gemäss den Ansprüchen 24 bis 33, die SIM Karten (3) gemäss den Ansprüchen 34 bis 47 umfassen und die als Kommunikationsendgeräte (1) über ein Kommunikationsnetzwerk (5) miteinander verbunden sind.

49. System gemäss dem vorhergehenen Anspruch, dadurch gekennzeichnet, dass das Kommunikationsnetzwerk (5) ein Mobilfunknetz umfasst.

50. System gemäss dem vorhergehenen Anspruch, dadurch gekennzeichnet, dass das Mobilfunknetz ein Mobilfunknetz gemäss dem GSM Standard ist.

51. System gemäss einem der Ansprüche 48 bis 50, dadurch gekennzeichnet, dass das Kommunikationsnetzwerk (5) ein Fixnetz umfasst.

52. System gemäss einem der Ansprüche 48 bis 51, dadurch gekennzeichnet, dass das Kommunikationsnetzwerk (5) das Internet umfasst.

53. System gemäss einem der vorhergehenen Ansprüche 48 bis 52, dadurch gekennzeichnet, dass es weitere Kommunikationsendgeräte, insbesondere Personal Computers, Laptops und Palmtops umfasst, von denen mindestens gewisse mit einem Video-Sensor ausgestattet sind und die über das Kommunikationsnetzwerk (5) miteinander verbunden sind.

54. System gemäss einem der Ansprüche 48 bis 53, dadurch gekennzeichnet, dass es zusätzlich externe gesicherte Vorrichtungen (13) umfasst welche mit Kommunikationsendgeräten (1) drahtlos und unter Zuhilfenahme von TTP Diensten kommunizieren können.

55. System gemäss dem vorhergehenen Anspruch, dadurch gekennzeichnet, dass die gesicherte Vorrichtung (13) mittels Induktion (14) mit der SIM Karte (3) im Kommunikationsendgerät (1) kommuniziert.

56. System gemäss dem vorhergehenen Anspruch 54, dadurch gekennzeichnet, dass die gesicherte Vorrichtung (13) mittels Infrarot mit dem Kommunikationsendgerät (1) kommuniziert.

57. System gemäss dem vorhergehenen Anspruch 54, dadurch gekennzeichnet, dass die gesicherte Vorrichtung (13) mittels Kurzmeldungen mit dem Kommunikationsendgerät (1) kommuniziert.

58. System gemäss einem der Ansprüche 48 bis 57, dadurch gekennzeichnet, dass es gesicherte Vorrichtungen (13) umfasst die mit Video Kameras ausgerüstet sind.

59. System gemäss einem der Ansprüche 48 bis 58, dadurch gekennzeichnet, dass es SIM Server (12) umfasst über welche die SIM Karten (3) in den Kommunikationsgeräten (1) mittels speziellen Meldungen mit einem biometrischen Server (10) kommunizieren.

60. System gemäss einem der Ansprüche 48 bis 59, dadurch gekennzeichnet, dass es biometrischen Server (10) umfasst, welche mit Tabellen (11) verbunden sind in denen biometrische Schlüssel abgespeichert sind, wobei mindestens ein biometrischer Schlüssel in einer Tabelle (11) einem entsprechenden Benutzer zugeordnet ist.

## Claims

1. Method for determining the authenticity of a user or a user group of a communication terminal device (1), characterised in that it comprises the following steps:
- recording and temporarily storing video information of body features (6, 7, 8) of the user or the user group in a point of presence (POP) (9);
- processing of said temporarily stored video information so that specific features are derived as biometric keys;
- storing of biometric keys in tables (11) of a biometric server (10) and in a SIM-card (3) of the user or the user group, at least one biometric key being assigned in a table (4, 11 ) to a respective user;
- inserting the SIM-card (3) into a communication terminal device (1 ) by the user, said SIM-card containing at least one personal biometric key;
- recording and temporarily storing of current video information of at least one body feature (6, 7, 8) of the user via a video sensor (2);
- processing of said temporarily stored current video information of the user so that at least one specific feature is derived and temporarily stored as a current biometric key;
- determining the authenticity by comparing the at least one temporarily stored current biometric key of the user to the at least one stored biometric key (4), the authenticity being considered to be ensured if the comparison is positive and the authenticity being considered not to be ensured if the comparison is negative.

2. Method according to the preceding claim, characterised in that with the recording and temporarily storing of current video information, the video sensor (2) particularly also registers movement, and in that this is included in the determination of the authenticity.

3. Method according to one of the preceding claims, characterised in that the temporary storage of current video information, their processing and renewed temporary storage, and the determination of the authenticity by comparison to the stored biometric keys (4) are executed by the SIM-card (3).

4. Method according to one of the preceding claims, characterised in that for the transmission of at least certain messages, security services of TTP (TTP services) are used in order to ensure the confidentiality, authenticity, integrity and non-deniable origin of the data exchanged via a communication network (5) as well as the authenticity of the sender of the data thereby exchanged.

5. Method according to one of the preceding claims, characterised in that in addition to the biometric keys, using TTP services, security information is recorded in the POP (9) and stored in tables (11) of the biometric server (10) and in the SIM-card (3), said security information being assigned to the respective users or user groups in tables (4, 11), and in that said security information is included in the determination of the authenticity.

6. Method according to the preceding claim, characterised in that the additional security information comprises security levels.

7. Method according to one of the claims 5 to 6, characterised in that the additional security information comprises information about the duration of validity.

8. Method according to one of the claims 5 to 7, characterised in that the additional security information comprises location information.

9. Method according to one of the claims 5 to 8, characterised in that the additional security information comprises passwords.

10. Method according to one of the preceding claims, characterised in that existing information for respective users or user groups can be updated and supplemented in the POP (9) using TTP services.

11. Method according to one of the preceding claims, characterised in that biometric keys stored in the tables (4, 11) of the biometric server (10) and in the SIM-card (3) of a communication terminal device (1 ) can be updated directly from the communication terminal device (1 ) using TTP services.

12. Method according to one of the preceding claims, characterised in that particularly facial features (7) are derived as biometric keys.

13. Method according to one of the preceding claims, characterised in that particularly eye patterns (6) are derived as biometric keys.

14. Method according to one of the preceding claims, characterised in that particularly fingerprints (8) are derived as biometric keys.

15. Method according to one of the preceding claims, characterised in that aside from visual features, particularly voice features are also recorded as biometric keys.

16. Method according to one of the preceding claims, characterised in that the recording of current video information is executed by a video sensor (2) located in the communication device (1).

17. Method according to one of the preceding claims, characterised in that the recording of current video information is executed by a video sensor located outside the communication device (1), the video information being transmitted to the communication device (1 ) for temporary storage and further processing.

18. Method according to the preceding claim, characterised in that the transmission of the current video information to the communication device (1 ) is executed by induction via a coil in a SIM-card (3).

19. Method according to claim 17, characterised in that the transmission of the current video information to the communication device (1 ) is executed by means of infrared.

20. Method according to claim 17, characterised in that the transmission of the current video information to the communication device (1 ) is executed by means of short messages.

21. Method according to one of the claims 17 to 20, characterised in that the video information is transmitted to the communication device (1) using TTP services.

22. Method according to one of the preceding claims, characterised in that the communication between the SIM-card (3) in the communication terminal device (1) and the biometric server (10) is executed by means of special messages via a SIM-server (12).

23. Method according to one of the preceding claims, characterised in that for the case where the authenticity of the user is ensured, usage of the communication terminal device (1 ) can be permitted, whereas for the case where the authenticity of the user is not ensured, usage of the communication terminal device (1 ) is not permitted.

24. Mobile device (1 ) for telephoning via radio, comprising an interface for receiving a SIM-card (3), and a video sensor (2) for recording of video information, characterised in that it is provided with storage means for storing biometric keys (4), in that it comprises processing means for deriving specific features from the video information, and in that it comprises comparison means for comparing these specific features to the stored biometric keys (4).

25. Device (1 ) according to the preceding claim, characterised in that it comprises a mobile radio telephone into which the video-sensor (2) is directly built in.

26. Device (1) according to claim 24, characterised in that it comprises an adapter into which the video-sensor (2) is built in.

27. Device (1) according to one of the claims 24 to 26, characterised in that it comprises a SIM-card (3), which is located in said interface for receiving the SIM-card and in which said biometric keys (4) are stored.

28. Device (1) according to the preceding claim, characterised in that said storage means, processing means, and comparison means are implemented in the SIM-card (3).

29. Device (1) according to one of the claims 24 to 28, characterised in that the processing means are especially prepared for determining body features (6, 7, 8) from the video information.

30. Device (1) according to the preceding claim, characterised in that the body features, for which the processing means are especially prepared, comprise facial features (7).

31. Device (1) according to one of the claims 29 to 30, characterised in that the body features, for which the processing means are especially prepared, comprise eye patterns (6).

32. Device (1) according to one of the claims 29 to 31, characterised in that the body features, for which the processing means are especially prepared, comprise fingerprints (8).

33. Device (1) according to one of the claims 24 to 32, characterised in that the biometric key also comprises body movements.

34. Subscriber identity module (SIM) card (3) for a communication terminal device (1), characterised in that at least one biometric key for determining the authenticity of a person or a group of persons is stored in the memory (4) of the SIM-card (3).

35. SIM-card (3) according to the preceding claim, characterised in that the stored biometric key comprises facial features (7).

36. SIM-card (3) according to one of the claims 34 to 35, characterised in that the stored biometric key comprises eye patterns (6).

37. SIM-card (3) according to one of the claims 34 to 36, characterised in that the stored biometric key comprises fingerprints (8).

38. SIM-card (3) according to one of the claims 34 to 37, characterised in that the stored biometric keys (4) also comprise voice features aside from visual features.

39. SIM-card (3) according to one of the claims 34 to 38, characterised in that other security information is stored in the SIM-card (3).

40. SIM-card (3) according to the preceding claim, characterised in that the stored security information comprises security levels.

41. SIM-card (3) according to one of the claims 39 to 40, characterised in that the stored security information comprises duration of validity information.

42. SIM-card (3) according to one of the claims 39 to 41, characterised in that the stored security information comprises location information.

43. SIM-card (3) according to one of the claims 39 to 42, characterised in that the stored security information comprises passwords.

44. SIM-card (3) according to one of the claims 34 to 43, characterised in that it is provided with means for temporarily storing video information, for deriving specific features from the temporarily stored video information and for temporarily storing these specific features, for comparing said temporarily stored features to the said stored biometric keys (4), and for executing different further steps depending on the result of this comparison.

45. SIM-card (3) according to one of the claims 34 to 44, characterised in that it is provided with means for composing and deciphering digitally signed and encrypted messages, particularly using trusted third party (TTP) services in order to ensure the confidentiality, authenticity, integrity and non-deniable origin of these messages as well as the authenticity of the sender of these messages, and for transmitting these messages to a biometric server (10).

46. SIM-card (3) according to one of the claims 34 to 45, characterised in that it is provided with means for composing and deciphering messages, particularly according to a point-to-point method.

47. SIM-card (3) according to one of the claims 34 to 46, characterised in that it comprises an electromagnetic coil via which it can exchange by inductance data with an external secured device (13), which data is related to the security of these external devices.

48. System for executing a method according to the claims 1 to 23 by means of mobile devices (1) according to the claims 24 to 33, which devices comprise SIM-cards according to the claims 34 to 47 and which devices are connected to each other as communication terminal devices (1) via a communication network (5).

49. System according to the preceding claim, characterised in that the communication network (5) comprises a mobile radio network.

50. System according to the preceding claim, characterised in that the mobile radio network is a mobile radio network according to the GSM standard.

51. System according to one of the claims 48 to 50, characterised in that the communication network (5) comprises a fixed network.

52. System according to one of the claims 48 to 51, characterised in that the communication network (5) comprises the Internet.

53. System according to one of the claims 48 to 52, characterised in that it comprises additional communication terminal devices, particularly personal computers, laptop and palmtop computers, of which at least certain ones are equipped with a video sensor and which are connected to each other via the communication network (5).

54. System according to one of the claims 48 to 53, characterised in that it comprises in addition external secured devices (13), which can communicate with communication terminal devices (1) in a wireless manner and by using TTP services.

55. System according to the preceding claim, characterised in that the secured device (13) communicates with the SIM-card (3) in the communication terminal device (1) by means of inductance (14).

56. System according to claim 54, characterised in that the secured device (13) communicates with the communication terminal device (1) by means of infrared.

57. System according to claim 54, characterised in that the secured device (13) communicates with the communication terminal device (1) by means of short messages.

58. System according to one of the claims 48 to 57, characterised in that it comprises secured devices (13) which are equipped with video cameras.

59. System according to one of the claims 48 to 58, characterised in that it comprises SIM-servers (12) via which the SIM-cards (3) in the communication terminal devices (1) communicate with a biometric server (10) by means of special messages.

60. System according to one of the claims 48 to 59, characterised in that it comprises biometric servers (10) which are connected to tables (11) in which biometric keys are stored, at least one biometric key being assigned to a respective user in a table (11).

## Revendications

1. Procédé d'authentification d'un utilisateur ou d'un groupe d'utilisateurs d'un terminal de communications (1), caractérisé en ce qu'il comprend les opérations suivantes :
- réception et stockage intermédiaire d'informations vidéo représentant des particularités physiques (6, 7, 8) de l'utilisateur ou du groupe d'utilisateurs dans un "Point of Presence" ou point de présence (POP) (9),
- traitement des informations vidéo mentionnées, qui ont subi un stockage intermédiaire, de telle sorte que certaines particularités soient extraites en tant que clefs biométriques,
- mise en mémoire des clefs biométriques dans des tableaux (11) d'un serveur biométrique (10) et dans une carte SIM (Subscriber (abonné) Identification Module) (3) de l'utilisateur ou du groupe d'utilisateurs, au moins une clef biométrique étant attribuée, dans un tableau (4, 11), à un utilisateur correspondant,
- introduction, par l'utilisateur, de la carte SIM (3), qui comporte au moins une clef biométrique personnelle, dans un terminal de communications (1),
- réception et stockage intermédiaire d'informations vidéo correspondant à l'état le plus récent représentant au moins une particularité physique (6, 7, 8) de l'utilisateur, par l'intermédiaire d'un capteur vidéo (2),
- traitement des informations vidéo correspondant à l'état le plus récent sur l'utilisateur, ayant subi un stockage intermédiaire, de telle sorte qu'au moins une particularité déterminée soit élaborée en tant que clef biométrique valable et subisse un stockage intermédiaire,
- authentification par comparaison entre au moins une clef biométrique, correspondant à l'état le plus récent et ayant subi un stockage intermédiaire, de l'utilisateur mise en mémoire, avec au moins une clef biométrique précédente mise en mémoire (4), une au moins, l'authentification étant considérée comme assurée si le résultat de la comparaison est positif et comme non assurée si le résultat de la comparaison est négatif.

2. Procédé selon la revendication précédente, caractérisé en ce que, lors de la réception et du stockage intermédiaire d'informations vidéo correspondant à l'état le plus récent, le capteur vidéo (2) détecte en particulier, également, les mouvements et qu'il en est tenu compte lors de l'authentification.

3. Procédé selon l'une des revendications précédentes, caractérisé en ce que le stockage intermédiaire d'informations vidéo correspondant à l'état le plus récent, leur traitement et leur nouveau stockage intermédiaire, l'authentification sont effectués par la carte SIM (3) grâce à la comparaison avec les clefs biométriques mises en mémoire (4).

4. Procédé selon l'une des revendications précédentes, caractérisé en ce que, lors de la transmission d'au moins certains messages, on fait appel à des services de sécurité du tiers habilité (services tiers habilités) afin de garantir la confidentialité, l'authenticité, l'impossibilité de contester l'origine et l'intégrité des données alors échangées par l'intermédiaire d'un réseau de communications (5) ainsi que l'authenticité de l'émetteur des données échangées à cette occasion.

5. Procédé selon l'une des revendications précédentes, caractérisé en ce que, dans le POP (9), outre les clefs biométriques, on reçoit des informations de sécurité en recourant à des services tiers habilité et on les met en mémoire dans les tableaux (11) du serveur biométrique (10) et dans la carte SIM (3) tout en les faisant correspondre, dans les tableaux (4, 11), aux utilisateurs ou groupes d'utilisateurs considérés, et en ce que ces informations de sécurité sont prises en compte lors de l'authentification.

6. Procédé selon la revendication précédente, caractérisé en ce que les informations de sécurité supplémentaires comprennent des degrés de sécurité.

7. Procédé selon la revendication 5 ou 6, caractérisé en ce que les informations de sécurité supplémentaires comprennent des indications sur la durée de validité.

8. Procédé selon l'une des revendications 5 à 7, caractérisé en ce que les les informations de sécurité supplémentaires comprennent des indications de lieux.

9. Procédé selon l'une des revendications 5 à 8, caractérisé en ce que les informations de sécurité supplémentaires comprennent des mots de passe.

10. Procédé selon l'une des revendications précédentes, caractérisé en ce que l'on met à jour et complète des informations existant déjà dans le POP (9) et destinées à des utilisateurs ou à un groupe d'utilisateurs correspondants, en faisant appel à l'aide de services tiers habilités.

11. Procédé selon l'une des revendications précédentes, caractérisé en ce que des clefs biométriques qui sont mises en mémoire dans les tableaux (4, 11) du serveur biométrique (10) et dans la carte SIM (3) d'un terminal de communications (1) peuvent être mises à jour directement à partir du terminal de communications (1) avec l'aide de services tiers habilités.

12. Procédé selon l'une des revendications précédentes, caractérisé en ce que ce sont en particulier les particularités du visage (7) que l'on fait ressortir en tant que clefs biométriques.

13. Procédé selon l'une des revendications précédentes, caractérisé en ce que ce sont en particulier les motifs des yeux (6) que l'on fait ressortir en tant que clefs biométriques.

14. Procédé selon l'une des revendications précédentes, caractérisé en ce que ce sont en particulier les empreintes digitales (8) que l'on fait ressortir en tant que clefs biométriques.

15. Procédé selon l'une des revendications précédentes, caractérisé en ce que ce sont notamment, outre les particularités visuelles, les particularités de la voix que l'on fait ressortir en tant que clefs biométriques.

16. Procédé selon l'une des revendications précédentes, caractérisé en ce que les informations vidéo correspondant à l'état le plus récent sont recueillies au moyen d'un capteur vidéo (2) qui se trouve dans le terminal de communications (1).

17. Procédé selon l'une des revendications précédentes, caractérisé en ce que les informations vidéo correspondant à l'état le plus récent sont recueillies au moyen d'un capteur vidéo (2) qui se trouve à l'extérieur du terminal de communications (1), ces informations vidéo étant transmises au terminal de communications (1) aux fins de stockage intermédiaire et de de traitement.

18. Procédé selon la revendication précédente, caractérisé en ce que la transmission des informations vidéo correspondant à l'état le plus récent à l'appareil de communications (1) se fait par induction (14), au moyen d'une bobine montée dans une carte SIM (3).

19. Procédé selon la revendication 17, caractérisé en ce que la transmission au terminal de communications (1) des informations vidéo correspondant à l'état le plus récent se fait par infrarouge.

20. Procédé selon la revendication 17, caractérisé en ce que la transmission au terminal de communications (1) des informations vidéo correspondant à l'état le plus récent se fait au moyen de messages courts.

21. Procédé selon l'une des revendications 17 à 20, caractérisé en ce que l'on transmet les informations vidéo au terminal de communications (1) en ayant recours aux services de tiers habilités.

22. Procédé selon l'une des revendications précédentes, caractérisé en ce que la communication entre la carte SIM (3) placée dans le terminal de communications (1) et le serveur biométrique (10) se fait au moyen de messages spéciaux, par l'intermédiaire d'un serveur SIM (12).

23. Procédé selon l'une des revendications précédentes, caractérisé en ce que, dans le cas où l'authenticité de l'utilisateur est assurée, l'utilisation du terminal de communications (1) peut être autorisée tandis que, dans le cas où l'authenticité de l'utilisateur n'est pas assurée, l'utilisation du terminal de communications (1) n'est pas autorisée.

24. Dispositif mobile (1) permettant de téléphoner par radio et comprenant une interface destinée à recevoir une carte SIM (3) et un capteur vidéo (2) servant à recueillir des informations vidéo, caractérisé en ce qu'il possède des moyens de mise en mémoire (4) pour le stockage de clefs biométriques, en ce qu'il possède des moyens de traitement servant à extraire des caractéristiques déterminées des informations vidéo mentionnées, et en ce qu'il possède des moyens de comparaison permettant de comparer ces caractéristiques déterminées aux clefs biométriques (4) mises en mémoire.

25. Dispositif (1) selon la revendication précédente, caractérisé en ce qu'il comprend un radiotéléphone mobile dans lequel le capteur vidéo (2) est monté directement.

26. Dispositif (1) selon la revendication 24, caractérisé en ce qu'il comprend un adaptateur dans lequel le capteur vidéo (2) est monté.

27. Dispositif (1) selon l'une des revendications 24 à 26, caractérisé en ce qu'il comprend une carte SIM (3) qui se trouve dans l'interface mentionné servant à recevoir une carte SIM (3) et dans lequel les clefs biométriques (4) mentionnées sont en mémoire.

28. Dispositif (1) selon la revendication précédente, caractérisé en ce que les moyens mentionnés de stockage, de traitement et de comparaison sont réalisés sur la carte SIM (3).

29. Dispositif (1) selon l'une des revendications 24 à 28, caractérisé en ce que les moyens de traitement sont étudiés spécialement pour extraire, des informations vidéo, des particularités physiques (6, 7, 8) de personnes.

30. Dispositif (1) selon la revendication précédente, caractérisé en ce que les particularités physiques pour lesquelles les moyens de traitement sont étudiés spécialement comprennent des traits du visage (7).

31. Dispositif (1) selon la revendication 29 ou 30, caractérisé en ce que les particularités physiques pour lesquelles les moyens de traitement sont étudiés spécialement comprennent des motifs des yeux (6).

32. Dispositif (1) selon l'une des revendications 29 à 31, caractérisé en ce que les particularités physiques pour lesquelles les moyens de traitement sont étudiés spécialement comprennent des empreintes digitales (8).

33. Dispositif (1) selon l'une des revendications 24 à 32, caractérisé en ce que la clef biométrique comprend aussi des mouvements corporels.

34. Carte Subscriber Identity Module (SIM) (3) destinée à un terminal de communications (1), caractérisée en ce qu'au moins une clef biométrique d'authentification d'une personne ou d'un groupe de personnes est enregistrée dans la mémoire (4) de la carte SIM (3).

35. Carte SIM (3) selon la revendication précédente, caractérisée en ce que la clef biométrique (4) mise en mémoire comprend des particularités du visage (7).

36. Carte SIM (3) selon la revendication 34 ou 35, caractérisée en ce que la clef biométrique (4) mise en mémoire comprend des motifs des yeux (6).

37. Carte SIM (3) selon l'une des revendications 34 à 36, caractérisée en ce que la clef biométrique (4) mise en mémoire comprend des empreintes digitales (8).

38. Carte SIM (3) selon l'une des revendications 34 à 37, caractérisée en ce que les clefs biométriques (4) mises en mémoire comprennent, outre des particularités visuelles, des particularités de la voix.

39. Carte SIM (3) selon l'une des revendications 34 à 38, caractérisée en ce que d'autres informations de sécurité sont mises en mémoire sur la carte SIM (3).

40. Carte SIM (3) selon la revendication précédente, caractérisée en ce que les informations de sécurité mises en mémoire comprennent des degrés de sécurité.

41. Carte SIM (3) selon la revendication 39 ou 40, caractérisée en ce que les informations de sécurité mises en mémoire comprennent des renseignements sur les durées de validité.

42. Carte SIM (3) selon l'une des revendications 39 à 41, caractérisée en ce que les informations de sécurité mises en mémoire comprennent des indications de lieux.

43. Carte SIM (3) selon l'une des revendications 39 à 42, caractérisée en ce que les informations de sécurité mises en mémoire comprennent des mots de passe.

44. Carte SIM (3) selon l'une des revendications 34 à 43, caractérisée en ce qu'elle possède des moyens permettant le stockage intermédiaire d'informations vidéo, d'extraire des particularités déterminées des informations vidéo ayant subi ce stockage intermédiaire et de faire subir un stockage intermédiaire à ces particularités déterminées afin de comparer les particularités déterminées en question, ayant subi un stockage intermédiaire, aux clefs biométriques (4) mises en mémoire, déjà mentionnées, et pour exécuter diverses opérations supplémentaires en fonction du résultat de cette comparaison.

45. Carte SIM (3) selon l'une des revendications 34 à 44, caractérisée en ce qu'elle possède des moyens permettant de composer et de déchiffrer des messages à signature numérique, chiffrés, en particulier en faisant appel à des services tiers habilités (STH ou TTP) afin de garantir la confidentialité, l'authenticité, l'impossibilité de contester l'origine et l'intégrité de ces messages ainsi que l'authenticité des expéditeurs de ces messages, et pour transmettre ces messages à un serveur biométrique (10).

46. Carte SIM (3) selon l'une des revendications 34 à 45, caractérisée en ce qu'elle possède des moyens permettant de composer et de déchiffrer des messages, en particulier suivant un procédé point à point.

47. Carte SIM (3) selon l'une des revendications 34 à 46, caractérisée en ce qu'elle est pourvue d'une bobine électrique par l'intermédiaire de laquelle elle peut échanger par induction (14), avec des dispositifs extérieurs (13) protégés, des données se rapportant à leur sécurité.

48. Système destiné à l'application d'un procédé selon les revendications 1 à 23 avec des dispositifs mobiles (1) selon les revendications 24 à 33, comprenant des cartes SIM (3) selon les revendications 34 à 47 et qui, en tant que terminaux de communications (1), sont reliés les uns aux autres par un réseau de communications (5).

49. Système selon la revendication précédente, caractérisé en ce que le réseau de communications (5) comprend un réseau radio mobile.

50. Système selon la revendication précédente, caractérisé en ce que le réseau radio mobile (5) est un réseau radio mobile conforme à la norme GSM.

51. Système selon l'une des revendications 48 à 50, caractérisé en ce que le réseau de communications (5) comprend un réseau fixe.

52. Système selon l'une des revendications 48 à 51, caractérisé en ce que le réseau de communications (5) comprend Internet.

53. Système selon l'une des revendications 48 à 52, caractérisé en ce qu'il comprend d'autres terminaux de communications, en particulier des ordinateurs personnels, des ordinateurs portatifs et des ordinateurs de poche, au moins certains d'entre eux étant équipés d'un capteur vidéo, et qui sont reliés les uns aux autres par l'intermédiaire du réseau de communications (5).

54. Système selon l'une des revendications 48 à 53, caractérisé en ce qu'il comprend en outre des dispositifs extérieurs protégés (13) qui peuvent communiquer par radio, et à l'aide de services tiers habilités, avec des terminaux de communications (1).

55. Système selon la revendication précédente, caractérisé en ce que le dispositif protégé (13) communique par induction (14) avec la carte SIM (3) se trouvant dans le terminal de communications (1).

56. Système selon la revendication 54, caractérisé en ce que le dispositif protégé (13) communique par infrarouge avec le terminal de communications (1).

57. Système selon la revendication 54, caractérisé en ce que le dispositif protégé (13) communique avec le terminal de communications (1) au moyen de messages courts.

58. Système selon l'une des revendications 48 à 57, caractérisé en ce qu'il comprend des dispositifs protégés (13) qui sont équipés de caméras vidéo.

59. Système selon l'une des revendications 48 à 58, caractérisé en ce qu'il comprend des serveurs SIM (12) par l'intermédiaire desquels les cartes SIM (3) se trouvant dans les terminaux de communications (1) communiquent avc un serveur biométrique (10) au moyen de messages spéciaux.

60. Système selon l'une des revendications 48 à 59, caractérisé en ce qu'il comprend des serveurs biométriques (10) qui sont reliés à des tableaux (11) dans lesquels sont mises en mémoire des clefs biométriques, au moins une clef biométrique, dans un tableau (11), étant attribuée à un utilisateur correspondant.
